# EUROPEAN PATENT APPLICATION

(11) **EP 1 964 762 A2**
(43) Date of publication of application: **03.09.2008**
(21) Application number: 08003758.3
(22) Date of filing: 29.02.2008
(51) Int. Cl.: B62K 23/02, B62K 23/06, B62M 25/08

(54) **Control device for a bicycle and bicycle comprising it**

(30) Priority: 01.03.2007 IT MI20070397
(71) Applicant: CAMPAGNOLO S.r.l., 36100 Vicenza (VI) (IT)
(72) Inventor: Dal Pra', Giuseppe, 36010 Zanè (VI) (IT); De Perini, Bruno, 36075 Montecchio Maggiore (VI) (IT)
(74) Representative: Riccardi, Elisa

(57) **Abstract**

A control device for imparting at least one electrical-electronic control to at least one bicycle equipment is provided, comprising a support body (2) carrying at least one switch (46, 47), a respective actuation element (24, 25, 39), and a respective manual actuation member (34). By providing for the actuation element (24, 25, 39) to be elastic, the tactile feeling caused by the change of state of the switch (46, 47) is increased in that the actuation element (24, 25, 39) compresses during the initial step of actuation and then, at the moment when the switch (46, 47) changes state, the elastic actuation element (24, 25, 39) decompresses following the mobile part of the switch (46, 47).

## Description

The present invention relates to a control device for a bicycle, as well as to a bicycle comprising such a control device.

Known control devices for a bicycle comprise a support body suitable for attachment at a handgrip portion of the handlebars and carrying one or more manual actuation members, of the lever type, in other words actuated with a rotary movement, or of the button type, in other words actuated with a linear movement, actuatable with a finger or with more than one finger to impart controls to bicycle equipments, such as a brake, a derailleur or a so-called cyclecomputer.

The present invention more specifically relates to a control device for a bicycle for imparting at least one electrical-electronic control to at least one bicycle equipment, such as an electromechanical derailleur or a cyclecomputer.

In the present description and in the attached claims, the expression "control device for a bicycle for imparting at least one electrical-electronic control" or in short "electric-electronic control device" should not be construed in a limiting sense to exclude the possibility that the control device can also impart one or more mechanical controls to one or more mechanical bicycle equipments, such as a mechanical derailleur and/or a mechanical brake.

A control device for a bicycle according to the preamble of claim 1 is known from EP 1 264 765 B1. Such a control device comprises a brake lever to control a mechanical brake through a traction cable, a first gearshifting lever arranged behind the brake lever, and a second gearshifting lever arranged on a proximal surface of a support body of the control device, to control an electromechanical derailleur in the two directions, and a button arranged on the proximal surface of the control device to input controls into a cyclecomputer. The gearshifting levers and the actuation button of the cyclecomputer act upon respective electric switches, of the microswitch type, each including a dome-shaped deformable diaphragm. To switch the switches, an actuation head associated with the respective lever or with the respective button faces the deformable diaphragm in the rest condition of the lever or button, and acts biasing the deformable diaphragm in the actuation condition of the lever or button.

After a displacement of sufficient entity of the lever or button, the diaphragm gets deformed almost instantaneously.

The technical problem at the basis of the present invention is to increase the tactile feeling of the successful actuation of a switch through a manual actuation member in an electrical-electronic control device for bicycles.

The invention concerns a control device for a bicycle for imparting at least one electrical-electronic control to at least one bicycle equipment, comprising a support body, at least one switch, a respective actuation element, and a respective manual actuation member, characterized in that the actuation element is elastic.

The provision of an elastic actuation element of the switch allows the tactile feeling caused by the change of state of the switch to be increased in that the actuation element compresses during the initial step of actuation and then, at the moment when the switch changes state, the elastic actuation element decompresses following the mobile part of the switch.

Preferably, said at least one switch comprises a diaphragm with substantially sudden deformation.

More preferably, said diaphragm is a first contact of said switch and is suitable for taking up a first configuration in which it is dome-shaped and electrically insulated from a second contact of said switch, and a second configuration in which it is deformed and in physical contact with said second contact of said switch.

In an embodiment, the elastic actuation element comprises a helical spring.

More preferably, said elastic actuation element further comprises a small actuation nail extending inside said helical spring.

The small actuation nail allows the abrasion on the mobile part of the switch, in particular the abrasion on the diaphragm, to be kept to low values.

In an embodiment, the actuation element comprises a yielding shank.

In an embodiment, the manual actuation member comprises a lever.

In an embodiment, the manual actuation member comprises a button.

Preferably, the manual actuation member is integrally made with the elastic actuation element.

More preferably, the button is co-moulded with the elastic actuation element.

Advantageously, a plurality of buttons are made on a common yielding membrane.

Preferably, a return element is provided to bias the manual actuation member towards a rest position in which said switch is not actuated.

In this way, a unidirectional manual actuation is sufficient to impart the electrical-electronic control.

Preferably, in the rest position of the manual actuation member, the actuation element is in contact with or in close proximity of the switch.

In this way, the switch is not biased in the rest position of the manual actuation member.

The support body is preferably suitable for attachment at a grip end of curved handlebars.

Preferably, said manual actuation member has a predetermined stroke.

Preferably, said at least one bicycle equipment is selected from the group consisting of an electromechanical derailleur or a cyclecomputer.

Preferably, said control device further comprises at least one further manual actuation member to impart at least one mechanical control to a bicycle equipment.

Where provided for, the mechanical bicycle equipment preferably comprises a mechanical derailleur and/or a mechanical brake.

In another aspect thereof, the invention concerns a bicycle comprising a control device as stated above.

Further features and advantages of the present invention shall become clearer from the following detailed description of some preferred embodiments thereof, made with reference to the attached drawings. In the drawings:
- FIG. 1 shows an exploded isometric view of an embodiment of a control device for a bicycle according to the invention;
- FIG. 2 shows an isometric view of some parts of the device of FIG. 1;

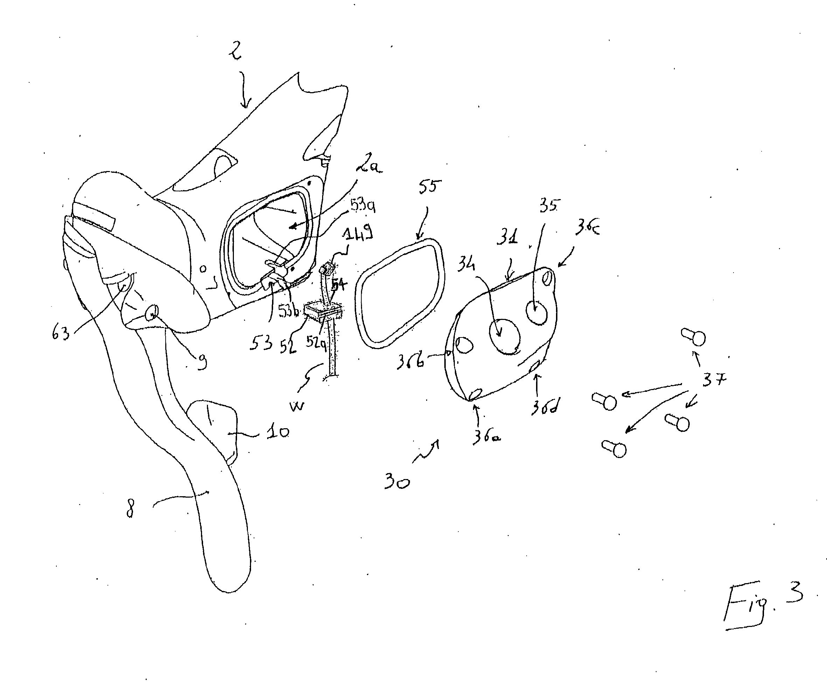

- FIG. 3 shows a partially exploded isometric view of the control device of FIG. 1, without covering sheath;

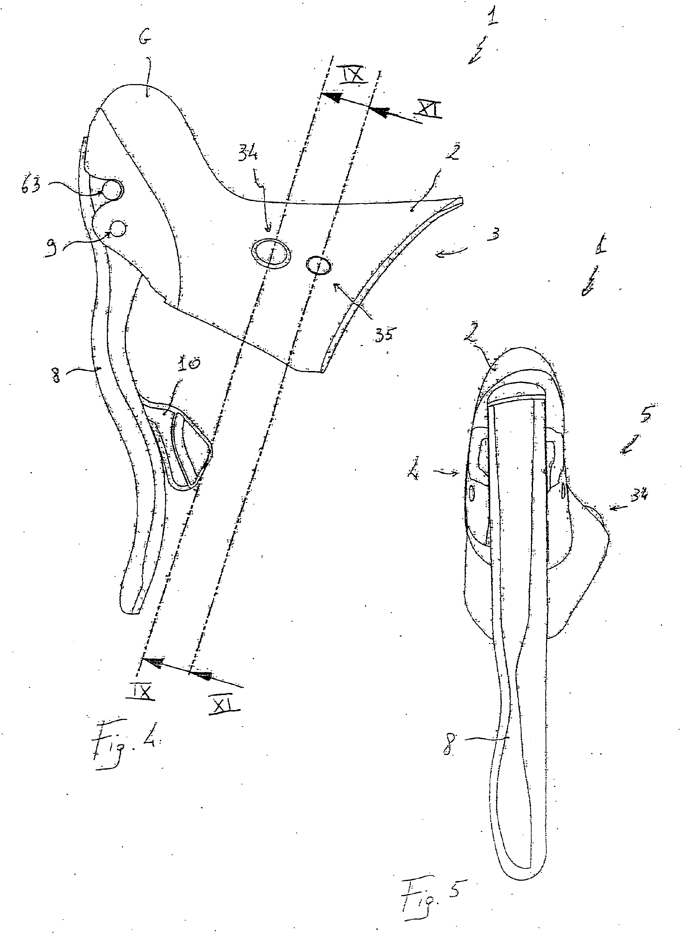

- FIG. 4 shows a side view of the control device of FIG. 1 assembled;
- FIG. 5 shows a front view of the control device of FIG. 1 assembled;
- FIG. 6 shows a view from above of the control device of FIG. 1 assembled;
- FIG. 7 shows a section view along plane VII-VII of FIG. 6;
- FIG. 8 shows a magnified view of a detail of FIG. 7;

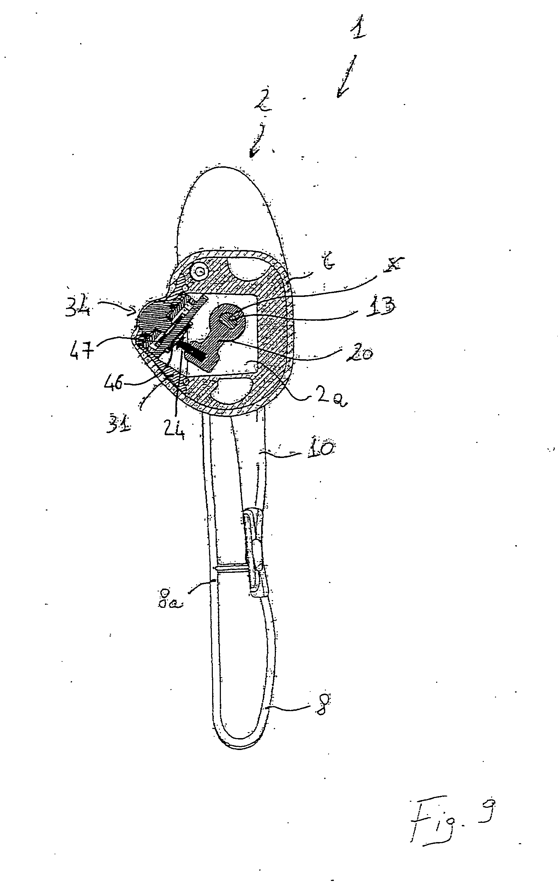

- FIG. 9 shows a section view along plane IX-IX of FIG. 4;
- FIG. 10 shows a magnified view of a detail of FIG. 9;
- FIG. 10a shows the detail of FIG. 10 in a different operating condition;

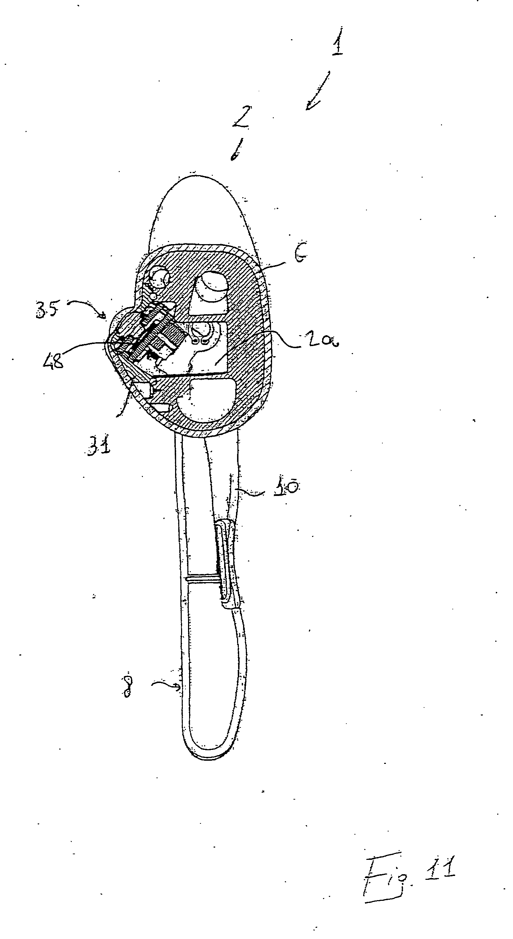

- FIG. 11 shows a section view along plane XI-XI of FIG. 4;
- FIG. 12 shows a magnified view of a detail of FIG. 11;
- FIG. 12a shows the detail of FIG. 12 in a different operating condition;
- FIG. 13 shows a magnified view of a detail of FIG. 1;
- FIG. 13a shows a different embodiment of the detail of FIG. 13;

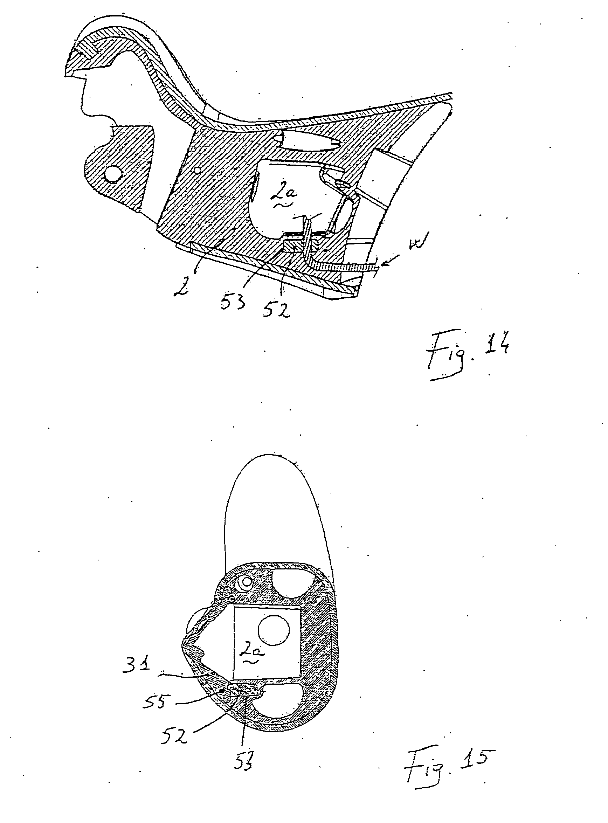

- FIG. 14 shows a first section view of the assembled control of the invention showing the detail of FIG. 13;
- FIG. 15 shows a second section view of the assembled control of the invention showing the detail of FIG. 13;
- FIG. 16 shows a detail corresponding to FIG. 10, but with an alternative embodiment of manual actuation member and associated actuation element for a switch;
- FIG. 16a shows the detail of FIG. 16 in a different operating condition; and
- FIG. 17 shows an electrical diagram of the control device of FIG. 1.

The figures illustrate an embodiment of a control device 1 for a bicycle according to the invention.

The control device 1 is a right-hand control device, i.e. intended to be associated with the right end of a bicycle handlebars. A control device intended to be associated with the left end of the handlebars shall substantially mirror the right one.

The control device 1 comprises a support body 2 suitable for attachment frontally of a curved handgrip portion of a bicycle handlebars, at a rear side 3 thereof, and frontally projecting from the handlebars to be grippable by the cyclist. The attachment shall take place through any connection means (not shown), like for example through a clip.

The support body 2 comprises, in general, with spatial reference to the condition mounted on the handlebars, an outer or distal side surface 4, an inner or proximal side surface 5, a top surface 6, and a bottom surface 7.

In order for the user to enter controls, the illustrated control device 1 comprises a plurality of manual actuation members, in this case a first mechanical control lever 8 and a second lever 10 and a pair of buttons 34, 35 for activating three electric switches.

Preferably, the first lever 8 is for the actuation of a brake, the second lever 10 is for the actuation of a derailleur in one direction, preferably towards a toothed wheel of greater diameter (upward gearshifting), and the buttons 34, 35 are for the actuation of the derailleur in a second direction, preferably towards gear wheels of smaller diameter (downward gearshifting), and for inputting controls into a computercycle. In the case illustrated, a so-called integrated control device is therefore concerned. Reference shall be made to such a preferred configuration hereinafter.

The first lever 8 is pivoted about a pin 9 to the support body 2.

A pin 60 is pivoted to the first lever 8 and has a seat 61 for receiving a head of a brake cable (not shown).

A brake release mechanism 62, also per se known, comprises a pin 63 having two operating conditions, which interacts with the support body 2 to tension or detension the brake cable.

The second lever 10 is arranged behind the first lever 8, and is pivoted about a pin 11 parallel to the pivot pin 9 of the first lever 8, so that the second lever 10 can follow the movement of the first lever 8.

More specifically, the second lever 10 is pivoted about the pin 11 to an end 12 of a shaft 13 having a longitudinal axis X substantially transversal to the axes of the pins 9 and 11, and rotationally supported in the support body 2 as better described below.

A first return spring 14 is arranged between the second lever 10 and the rotation shaft 13 to keep the second lever 10 biased, with respect to the rotation about the pin 11, towards a rest position behind and adjacent to the first lever 8.

A second return spring 15 is operatively arranged between the rotation shaft 13 and the support body 2 to keep both the rotation shaft 13 and the second lever 10 pivoted thereto biased towards a rest position with respect to the rotation about the axis X.

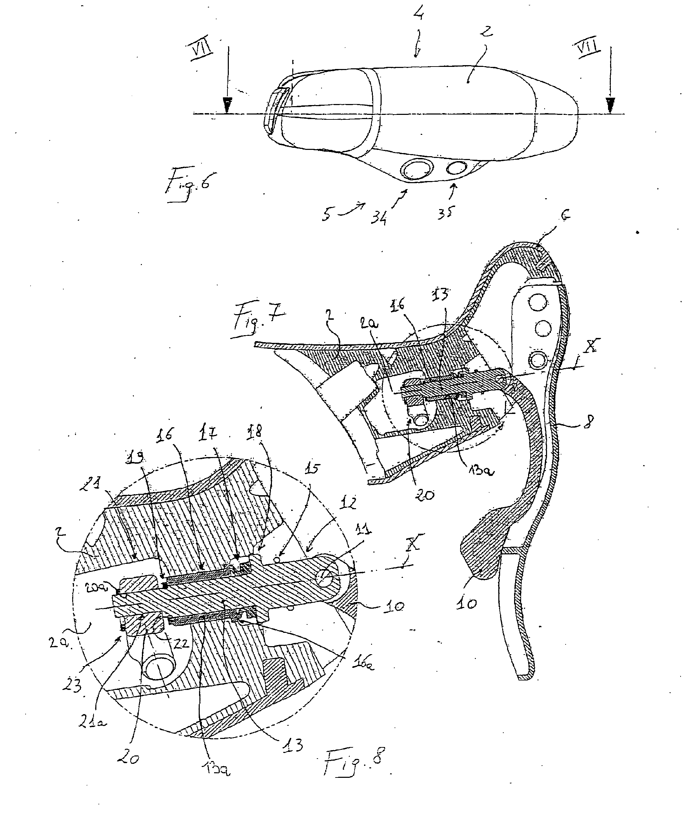

As can be seen more clearly in FIGs. 7 and 8, the rotation shaft 13 is supported in a hole 13a communicating with an inner cavity 2a of the support body 2, through a cylindrical anti-friction bushing 16 having an end flange 16a.

A sealing ring 17 (V-ring) is arranged between the end flange 16a of the bushing and an annular shoulder 18 formed on the outer surface of the rotation shaft 13. The annular shoulder 18, through the V-ring 17, axially and elastically locks the rotation shaft 13 in a first direction with respect to the bushing 16 and therefore to the support body 2.

The provision of the bushing 16 and the sealing ring 17 provides a tight seal between the second lever 10, exposed to the external environment, and the inner cavity 2a of the control device 2.

A first Seeger ring 19 is housed in a peripheral groove of the rotation shaft 13 to axially lock the rotation shaft 13 with respect to the bushing 16 and therefore to the support body 2 in the opposite direction.

A hammer 20 is force fitted to an end 21 of the rotation shaft 13 opposite the end 12 on which the second lever 10 is pivoted, within the cavity 2a of the support body 2.

The hammer 20 is force fitted onto the rotation shaft 13 in a predetermined angular position with respect to the second lever 10, through the provision of a flattened surface 21a of the end 21 of the shaft 13 and a correspondingly shaped hole 20a of the hammer 20.

The hammer 20 is axially locked to the rotation shaft 13 between an undercut 22 defined by the flattened surface 21a of the rotation shaft 13 on one side, and a second Seeger ring 23 on the other.

A small actuation nail 24 or mushroom is mounted on the free end of the hammer 20 through the interposition of a helical spring 25 arranged in a cavity 26 of the hammer 20.

More specifically, the shank of the small actuation nail 24 is inserted inside the helical spring 25.

The small actuation nail 24 is intended to actuate a first switch 46, as better explained hereinafter.

The control device 1 comprises a switch unit 30 partially received inside the cavity 2a of the support body 2.

The switch unit 30 comprises said first switch 46 actuated through the second lever 10, a second switch 47 and a third switch 48, and said two buttons 34, 35 associated with the second and third switches 47, 48 for the cyclist to input controls.

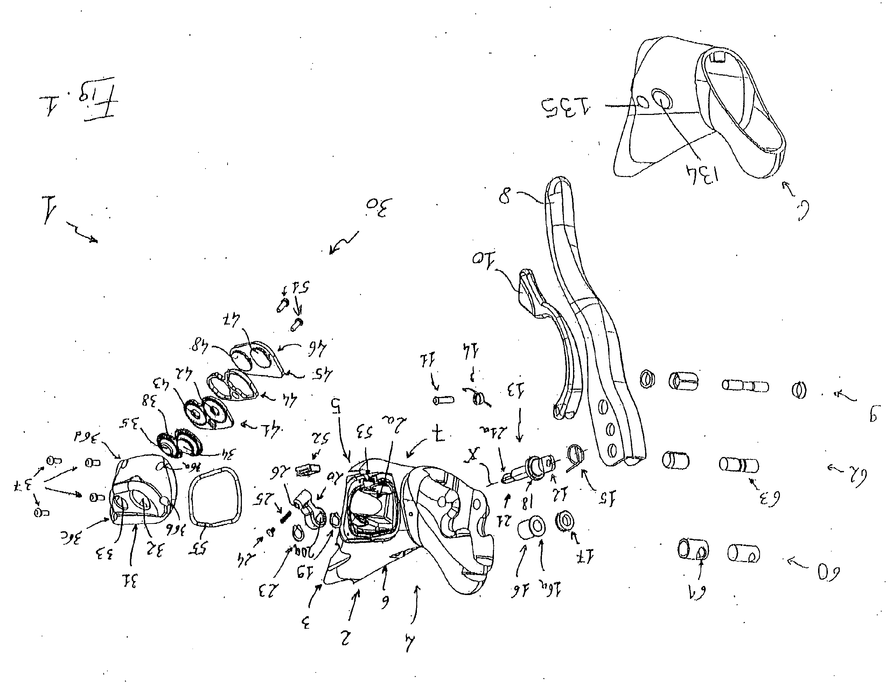

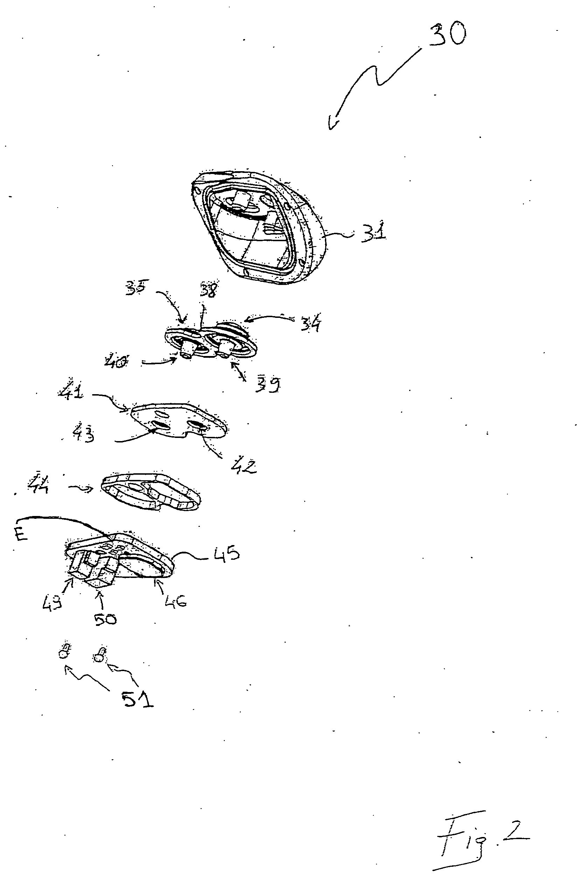

More specifically, the switch unit 30 comprises a support board 45 provided with the first switch 46 on a first side (FIG. 2) and with the second 47 and third 48 switches on the other side (FIG. 1).

The switches 46, 47 and 48 are of the known type, for example switches of the ED Domes type of ITT Industries, Inc., White Plains, New York, U.S.A.

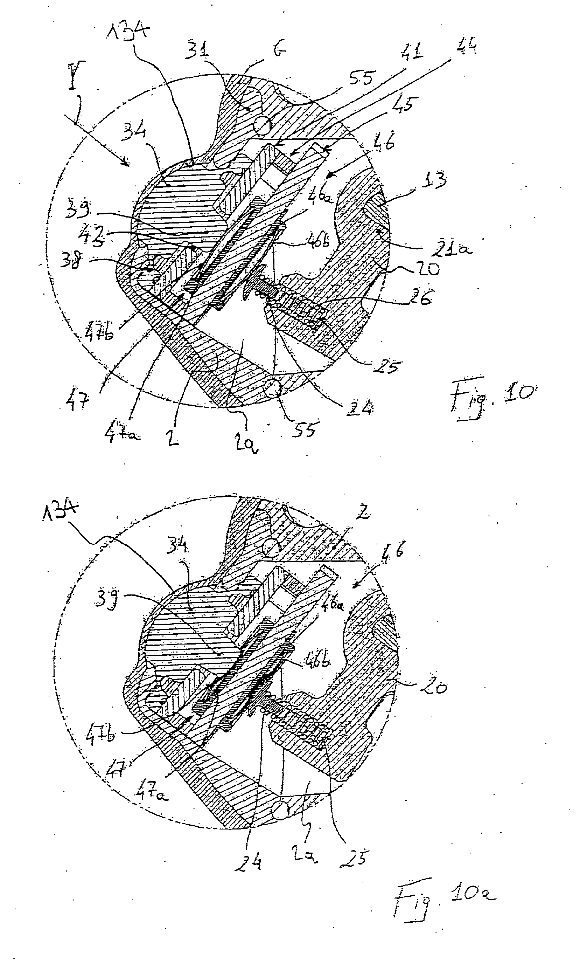

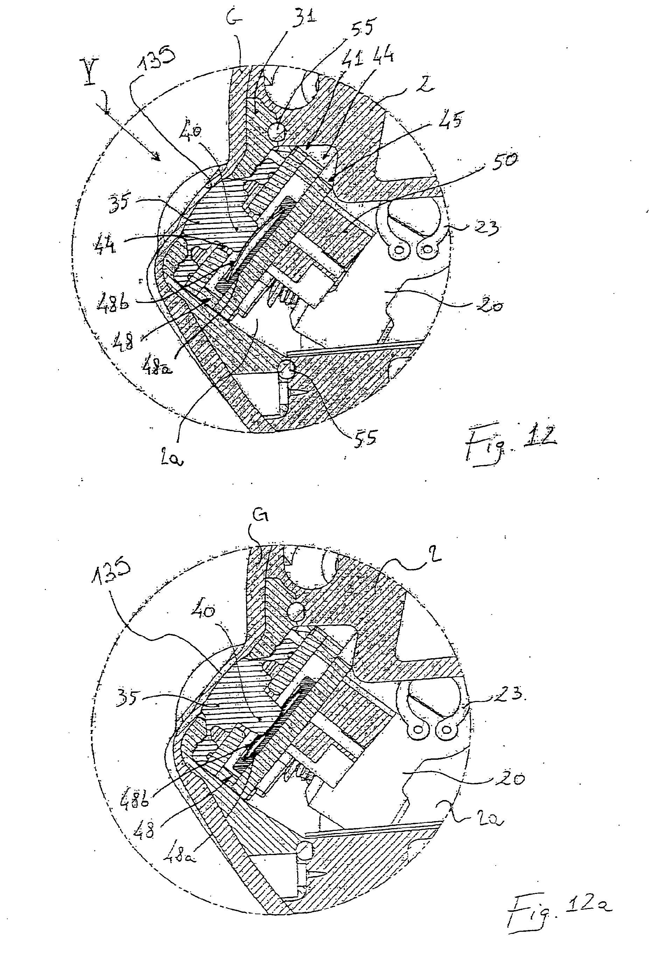

As can be seen more clearly in FIGs. 10a and 12a, such switches 46, 47 and 48 each consist of two diaphragms, a bottom one 46a, 47a and 48a and a top one 46b, 47b and 48b, electrically insulated from each other in the stable state of the switch by an insulating for example thermoplastic, support, and by an air gap.

The two diaphragms 46a, 47a, 48a and 46b, 47b, 48b are electrically connected to the two terminals of the switch.

The top diaphragm 46b, 47b and 48b has such an elasticity and is so dome-shaped that, when subject to a pressure, it substantially instantaneously collapses, thus establishing a contact with the bottom diaphragm 46a, 47a and 48a, therefore closing the switch 46, 47 and 48.

The first and second buttons 34, 35 are preferably made on a common elastic membrane 38, for example through co-moulding.

Each button 34, 35 of the switch unit 30 is provided with an elastic actuation shank 39, 40.

The actuation shank 39, 40 is for example made of a silicone-like rubber of Shore A hardness 30.

The switch unit 30 further comprises a first rigid intermediate element 41 provided with two guide holes 42, 43 for the actuation shanks 39, 40 of the buttons 34, 35, and a second rigid intermediate spacer element 44, which could of course be combined into a single rigid element, arranged between the buttons 34, 35 and the switch support board 45.

The switch unit 30 further comprises a concave cover 31, suitable for receiving the elastic membrane 38 carrying the switches 34, 35, the intermediate elements 41, 44 and the support board 45 carrying the switches.

The cover 31 of the switch unit 30 is provided with two holes 32, 33 for receiving the two buttons 34, 35.

Through two screws 51, the support board 45 is fixable to the cover 31 to mutually fix the aforementioned components in position to form the switch unit 30.

The components of the switch unit 30 are so sized that, in the rest condition of the buttons 34, 35, the actuation shank 39, 40, respectively, is in contact with the switch 47, 48, respectively, or slightly spaced therefrom.

The cover 31 is further provided with four holes 36a-36d for receiving screws 37 for fixing the switch unit 30 to the support body 2.

A gasket 55 is arranged between the cover 31 and the support body 2.

The switch unit 30, the cavity 2a of the support body 2 and the hammer 20 are so sized that, in the rest condition of the second lever 10, the small actuation nail 24 is in contact with the switch 46, or slightly spaced therefrom.

In the illustrated embodiment of the control device 1, the communication to the bicycle equipment of the control signals generated through the actuation of the switches 46, 47, 48 takes place via cable.

More specifically, the support board 45 carries, on the side facing the cavity 2a of the support body 2, a pair of connectors 49, 50 for connection through matching connectors to respective electric cables. In the figures, a single electric cable W equipped with a connector 149 is shown.

The electric cable W is arranged passing inside a hole 54 of a sealing element 52.

The support body 2 has a cavity 53 with a shape substantially matching the sealing element 52.

More specifically, the cavity 53 of the support body 2 is substantially parallelepiped, but slightly flared.

Preferably, the cavity 53 is slightly smaller in size than the sealing element 52.

The cavity 53 communicates with the cavity 2a and with the outside of the support body 2 through two respective notches 53a and 53b suitable for the passage of the electric cable W.

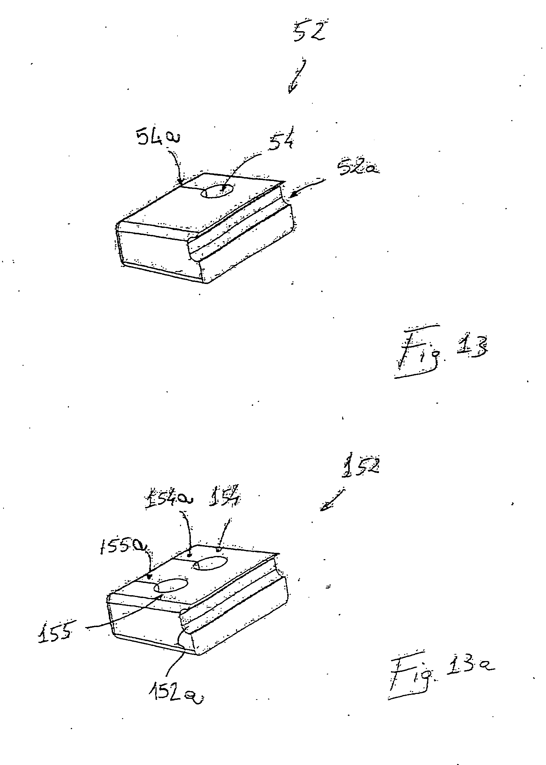

The sealing element 52, more clearly shown in FIG. 13, is substantially parallelepiped, but slightly tapered.

The sealing element 52 is made of a deformable material, for example rubber.

The hole 54 of the sealing element 52 is slightly smaller in size than the electric cable W.

The sealing element 52 also has a notch 54a extending from the hole 54 to the outer surface for the passage of the electric cable W, which could however be absent.

The sealing element 52 further has a transversal groove 52a suitable for receiving a portion of the gasket 55 arranged between the support body 2 and the switch unit 30.

The control device 1 is coated with a covering sheath G.

The covering sheath G of the control device 1 has, close to the buttons 34, 35, areas 134, 135 having such characteristics of deformability as to allow each button 34, 35 to be pushed until actuation of the associated switch 47, 48.

For connection of the control device 1 to the bicycle, the electric cable W is first inserted into the hole 54 of the sealing element 52 through the notch 54a.

The sealing element 52 is then inserted inside the cavity 53, passing the electric cable W from the side provided with the connector 149 into the cavity 2a of the support body 2 through the notch 53a and, from the other side, towards the outside of the control device 1 through the notch 53b.

The electric cable W, from the side provided with the connector 149, is passed inside the gasket 55 and fixed to the connector 49 of the switch unit 30.

The switch unit 30 is then fixed to the support body 2 with the interposition of the gasket 55, which pushes upon the transversal groove 52a of the sealing element 52.

Finally, the sheath G is slipped onto the control device 2.

The characteristic of deformability and the external size of the sealing element 52 slightly larger than the size of the cavity 53 make a tight seal between the outer surfaces of the sealing element 52 and the inner surfaces of the cavity 53.

Moreover, the characteristic of deformability of the sealing element 52, along with the size of the hole 54 slightly smaller than the diameter of the electric cable W, makes a tight seal between the electric cable W and the inner surface of the hole 54.

FIG. 13a shows an embodiment of a sealing element 152 provided for also receiving a second electric cable, for example connected to the second connector 50 of the support board 45. The sealing element 152 has a pair of holes 154 and 155, a transversal groove 152a, and preferably a pair of notches 154a and 155a extending from the holes 154 and 155.

In the case of use of the sealing element 152 and of two electric cables, the cavity 53 of the support body shall communicate with the cavity 2a and with the outside of the support body 2 through two respective pairs of notches suitable for the passage of the electric cables.

In the illustrated embodiment, the electric cable W is of the bipolar type, and the support board 45 carries components E for managing the switches 46, 47, 48.

The components E for managing the switches 46, 47, 48, preferably discrete components, are suitable for changing the electrical resistance between two terminals of the connector 49, according to the open or closed state of each of the switches 46, 47, 48.

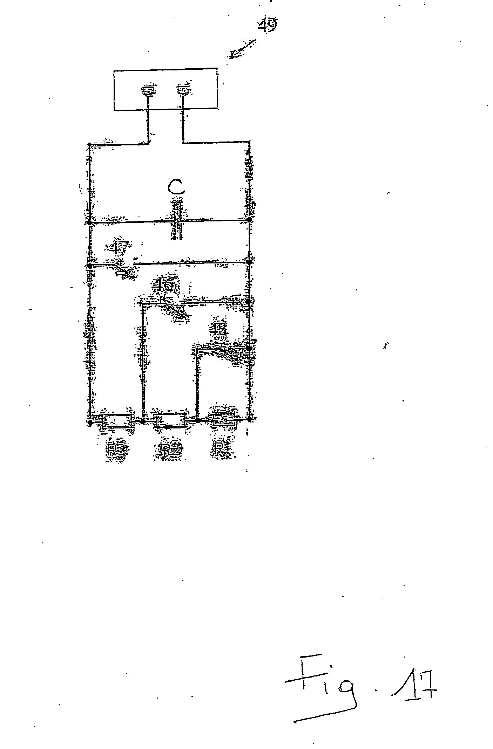

More specifically, as shown in FIG. 17, a capacitor C and, in parallel with the capacitor C, a series of three resistors R1, R2, R3 are connected between the two terminals of the connector 49.

One of the switches, preferably the downward gearshifting switch 47, is also connected between the two terminals of the connector 49, in parallel with capacitor C and with the series of resistors R1, R2, R3.

Another of the switches, preferably the upward gearshifting switch 46, is connected between a first of the terminals of the connector 49 and the node between the resistors R2 and R3.

The third switch, preferably the switch 48 for inputting controls into the cyclecomputer, is connected between the first of the terminals of the connector 49 and the node between the resistors R1 and R2.

The operation of the control device 1 shall now be described.

The traction of the first lever 8 towards the handlebars about the pin 9 causes the traction of the head of the brake cable housed in the seat 61 of the pin 60, in a per se known manner. The second lever 10 follows the movement of the first lever rotating about the pin 11.

As stated above, when the second lever 10 is in the rest position, the actuation element 24, 25 associated with the hammer 20 rests on or is proximity of the top diaphragm 46b of the switch 46, which is spaced and electrically insulated from the bottom diaphragm 46a of the switch 46 (FIG. 10).

Pushing the second lever 10 in the proximal direction, namely in the direction towards the middle plane of the handlebars, causes the rotation of the rotation shaft 13 about the axis X, and therefore the rotation of the hammer 20 within the cavity 2a of the support body 2.

The helical spring 25 housed in the hammer 20 compresses and the small actuation nail 24 starts to exert a pressure onto the top diaphragm 46b of the switch 46.

At the moment when the top diaphragm 46b collapses and gets deformed towards the bottom diaphragm 46a of the switch 46, the helical spring 25 decompresses following, together with the small actuation nail 24, the top diaphragm 46b in its deformation (FIG. 10a).

Along the path between the top diaphragm 46b, the actuation element 24, the helical spring 25, the hammer 20, the rotation shaft 13, the second lever 10, and the cyclist's finger a continuous physical contact is therefore maintained during the actuation of the switch 46.

In this way the tactile feeling caused by the deformation of the top diaphragm 46b, typical of the switch 46, is transferred and felt by the cyclist's finger resting upon the second lever 10, to a greater extent than the case in which, in the absence of the helical spring 25, the physical contact is lost at the moment of collapse of the top diaphragm 46b of the switch 46.

The small actuation nail 24 allows the abrasion of the top diaphragm 46b to be kept to low values compared with the possible abrasive effect that the helical spring 25 would have if it rested directly on the top diaphragm 46b.

The end of stroke of the second lever 10 is determined by the contact of the second lever 10 against the edge 8a of the first lever 8.

It is worthwhile emphasising that the rotation of the second lever 10 about axis X is also possible during the actuation of the brake lever 8.

As stated above, when each of the buttons 34, 35 is in the rest position, the actuation shank 39, 40 rests upon or is in proximity of the top diaphragm 47b, 48b of the switch 47, 48, which is spaced and electrically insulated from the bottom diaphragm 47a, 48a of the switch 47, 48 (FIG. 10, 12).

When the cyclist pushes the button 34, 35 towards the support body 2, the provision of the elastic membrane 38, the guide hole 43, 44 of the first intermediate element 41 and the spacer element 44 allows the button 34, 35 and the related actuation shank 39, 40 to move along an actuation direction Y substantially perpendicular to the plane defined by the support board 45.

Therefore, when the cyclist pushes the button 34, 35 towards the support body 2, the elastic membrane 38 in the area adjacent to the button 34, 35 gets deformed allowing the displacement of the button 34, 35 and of its actuation shank 39, 40 against the switch 47, 48.

The actuation shank 39, 40, thanks to its elasticity, compresses and starts to exert a pressure onto the top diaphragm 47b, 48b of the switch 47, 48.

At the moment when the top diaphragm 47b, 48b collapses and gets deformed towards the bottom diaphragm 47a, 48a, the actuation shank 39, 40 decompresses following the top diaphragm 47b, 48b in its deformation (FIG. 10a, 12a).

Along the path between the top diaphragm 47b, 48b, the button 34, 35, the yielding area 134, 135 of the sheath G, and the cyclist's finger a continuous physical contact is therefore maintained during the actuation of the switch 47, 48.

In this way the tactile feeling caused by the deformation of the top diaphragm 47b, 48b, typical of the switch 47, 48, is transferred and felt by the cyclist's finger resting upon the button 34, 35, to a greater extent than the case in which, if the actuation shank 39, 40 were not elastic, the physical contact would be lost at the moment of collapse of the top diaphragm 47b, 48b of the switch 47, 48.

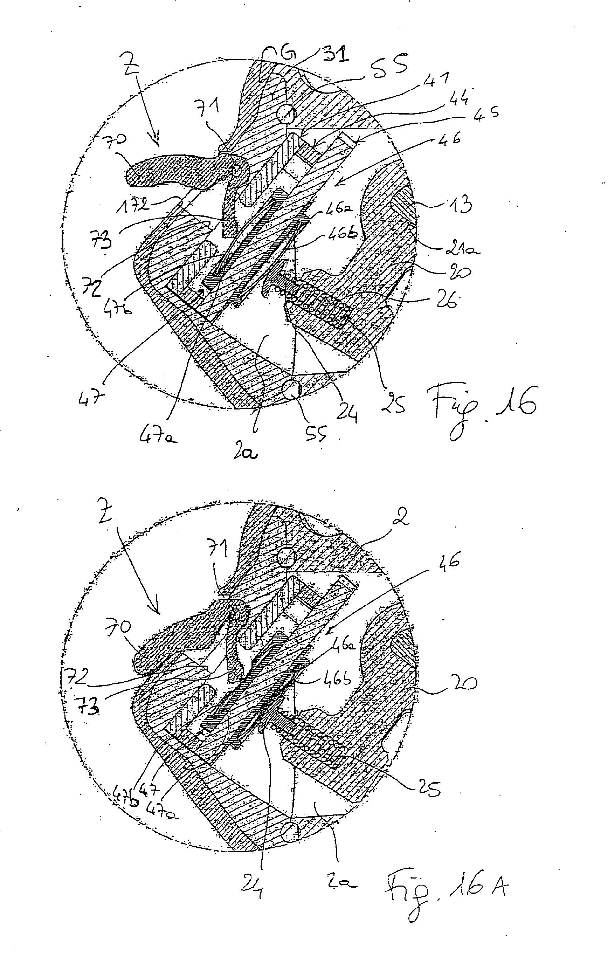

FIGs. 16 and 16a illustrate an alternative embodiment of components for actuating the switch 47, which alternatively or additionally could also be used for the switch 48.

A lever 70 is hinged about a pin 71 to the cover 31 of the switch unit 30, at a hole 72 of the cover and at a hole 172 of the sheath G.

The lever 70 integrally rotates and is preferably integrally made with an actuation element 73 of the switch 47, which is at an angle with respect to the lever 70.

The actuation element 73 is a yielding shank.

When the lever 70 is in rest position, the actuation shank 73 rests upon or is in proximity of the top diaphragm 47b of the switch 47, which is spaced and electrically insulated from the bottom diaphragm 47a of the switch 47 (FIG. 16).

When the cyclist pushes the lever 70 towards the support body 2 in direction Z, the yielding actuation shank 73 is pushed about the pin 71 against the switch 47.

The actuation shank 73, thanks to its elasticity, compresses and starts to exert a pressure upon the top diaphragm 47b of the switch 47.

At the moment when the top diaphragm 47b collapses and gets deformed towards the bottom diaphragm 47a, the actuation shank 73 decompresses following the top diaphragm 47b in its deformation (FIG. 16a).

Also in this case, along the path between the top diaphragm 47b, the lever 70 and the cyclist's finger a continuous physical contact is maintained during the actuation of the switch 47, which increases the tactile feeling caused by the deformation of the top diaphragm 47b.

The activation of one of the switches 46, 47 and 48 is transmitted to a bicycle equipment through the electronics E and the electric cable W.

More specifically, with reference to FIG. 17, when none of the switches 46, 47, 48 is actuated, the resistance between the terminals of the connector 49 is the sum of the resistances of resistors R1, R2 and R3. When the switch 47 is actuated, the terminals of the connector 49 are short-circuited. When the switch 46 is actuated, the resistance between the terminals of the connector 49 is equal to the resistance of resistor R3. When the switch 48 is actuated, the resistance between the terminals of the connector 49 is equal to the sum of the resistances of resistors R2 and R3.

It is worthwhile highlighting that FIG. 10a represents the simultaneous actuation of the switches 46, 47 merely for illustrative purposes.

However, in the case of simultaneous actuation of two or more of the switches 46, 47, 48, the signal corresponding to the actuation of the switch 47 (zero resistance between the terminals of the connector 49) shall prevail over both of the signals generated by the actuation of the switches 46 and 48. The signal generated by the actuation of the switch 46 (resistance between the terminals of the connector 49 equal to that of R3) shall prevail over the signal generated by the actuation of the switch 48. In this way, in the preferred embodiment, the actuation of the gearshift shall prevail over the simultaneous sending of controls to the cyclecomputer, and input of a downward gearshifting signal by the cyclist shall prevail over simultaneously input of an upward gearshifting signal by the cyclist.

Those skilled in the art shall understand that several changes, additions, replacements or omissions of parts can be made to the embodiment described above, without departing from the scope of the invention, some of which are presented hereinafter.

The control device could have a larger or smaller number of manual actuation members such as the buttons 32, 33 and the levers 10, 70, for activating a larger or smaller number of switches such as the switches 46, 47, 48, even only one.

For example, the second lever 10 could be absent, a button or a lever for controlling gearshifting in one direction and a button or a lever for controlling gearshifting in the opposite direction being provided in the control unit 30, as an alternative or in addition to one or more buttons or one or more levers for managing the cyclecomputer.

The switches can be provided, as an alternative or in addition to what has been described above, also to enter distinct controls into a cyclecomputer.

The connectors 49, 50 of the control unit 30 could be replaced by a single multipolar connector, by a single bipolar connector, or they could be absent, one or more electric cables being fixedly connected to the support board 45, for example tinned.

The components E for managing the switches 46, 47, 48 could be integrated components.

The cable(s) W, with the related sealing element 52, 152 and the related seat 53 in the support body 2, can be absent should the communication of the control signals entered through the control device 2 and the electric or electromechanical devices of the bicycle, such as a derailleur, a cyclecomputer or a brake, take place in wireless mode, for example at radio frequency, in this case an autonomous power supply source, such as a battery, being provided inside the control device 2.

In the case of communication via cable, the electronic components E for differentiating among the signals generated by the three switches 46, 47, 48 could be changed with respect to the embodiment described and illustrated above with reference to FIG. 16.

Moreover, the electronic components E for differentiating among the signals generated by the three switches 46, 47, 48 could be absent, three pairs of wires of the cable W, or of more than one cable, being provided, each directly interrupted by a respective switch 46, 47, 48.

The cable(s) W can directly lead to the controlled equipment, or to a common control unit for the various bicycle equipments.

Alternatively, the control device 2 could also comprise the electronics for controlling the bicycle equipments.

Still alternatively, the switches 46, 47, 48 could be arranged directly within a power circuit to control an electromechanical device of the bicycle, for example to directly control the actuation of an electric motor of a derailleur or of a brake.

The provision of an independent switch unit 30, removable from the support body 2 as described above, could also be used with a control lever, such as the second lever 10, which directly actuates an associated switch, such as the switch 46, namely without the interposition of the transmission mechanism comprising the rotation shaft 13 and the hammer 20.

In the absence of the first switch 46, the chamber 2a could be absent, non-tight or replaced with a recess.

In this case, a gasket could be provided between the support board 45 and the cover 31, as an alternative to the gasket 55.

Moreover, a cavity for housing the sealing element 52 or 152, similar to the cavity 53, could be made in the cover 31 or partially in the cover 31 and partially in the support body 2.

The provision of the transmission mechanism between the second lever 10 and the actuation element 24, 25 of the respective switch 46 may also be advantageous in the absence of an independent switch unit 30, removable from the support body 2, since it still allows the switch 46 to be arranged in a less exposed position of the control device 2.

In the motion transmission mechanism between the second lever 10 and the actuation element 24, 25 of the switch 46, the hammer 20 could be a transversal protrusion integrally made with the rotation shaft 13.

Moreover, the rotation shaft 13 could be rotationally supported in the support body 2 by different means from the anti-friction bushing 16, for example by a roller or ball bearing.

The switches 46, 47, 48 can alternatively be of the normally closed type.

Moreover, the switches 46, 47, 48 may not be of the diaphragm type. In the case of switches in which the switching of state takes place through the snapping of a mobile element it is in any case advantageous to provided for an elastic actuation element as described above.

Moreover, the switch 46 could be directly actuated by the helical spring 25, the small actuation nail 24 being absent, or by a different elastic element such as a small actuation nail made of an elastic material.

Similarly, the actuation shank 39, 40, 73 of the buttons 34, 35 or of the lever 70 could be replaced by a different elastic element, for example by a helical spring possibly associated with a small actuation nail, similarly to the actuation elements 24, 25 of the switch 46.

Furthermore, the switch 46 could be directly actuated by the hammer 20, the helical spring 25 and the small actuation nail 24 being absent, even if at the expenses of the transmission of the tactile feeling to the cyclist.

Similarly, the switches 47, 48 could be actuated by non-elastic actuation elements 39, 40, 73, even if at the expenses of the transmission of the tactile feeling to the cyclist.

The actuation shank 73 could not be integrally made with the actuation lever 70, provided that the two in any case are made to rotate as a unit about the pin 71.

The provision of actuation elements 24, 25 and 39, 40, 73 of the switches 46, 47, 48 of an elastic type may however be advantageous even independently of the insertion of the switches 46, 47, 48 themselves in an independent switch unit 30 removable from the support body 2, and/or independently of the provision of the transmission mechanism between the second lever 10 and the respective switch 46.

When one does not wish to exploit the elasticity of an actuation element, a rigid button could be used directly on the switch, in the absence of a distinct actuation element.

The return springs 14, 15, as well as the elasticity of the common membrane 38, could be replaced by different return elements.

In the embodiment of FIG. 16, a return spring could be operatively arranged between the lever 70 and the cover 31 to keep the lever 70 biased towards a rest position with respect to rotation about the pin 71.

Moreover, in this embodiment the rigid intermediate elements 41 and 44 of the switch unit 30 could be absent.

The control device 1 could be shaped for attachment to straight bicycle handlebars.

The first lever 8 could be absent, as well as there could be other manual actuation members for imparting respective mechanical controls to one or more bicycle equipments.

The articulation pins 9, 11 of the levers 8, 10 could not be parallel.

## Claims

1. A control device (1) for a bicycle for imparting at least one electrical-electronic control to at least one bicycle equipment, comprising a support body (2), at least one switch (46, 47, 48), a respective actuation element (24, 25, 39, 40, 73), and a respective manual actuation member (10, 34, 35, 70), **characterized in that** the actuation element (24, 25, 39, 40, 73) is elastic.

2. Control device (1) according to claim 1, wherein said at least one switch (46, 47, 48) comprises a diaphragm (46b) with substantially sudden deformation.

3. Control device (1) according to claim 2, wherein said diaphragm (46b, 47b, 48b) is a first contact of said switch (46, 47, 48) and is suitable for taking up a first configuration in which it is dome-shaped and electrically insulated from a second contact (46a, 47a, 48a) of said switch (46, 47, 48), and a second configuration in which it is deformed and in physical contact with said second contact (46a, 47a, 48a) of said switch (46, 47, 48).

4. Control device (1) according to any of the previous claims, wherein the elastic actuation element (24, 25) comprises a helical spring (25).

5. Control device (1) according to claim 4, wherein said elastic actuation element further comprises a small actuation nail (24) extending inside said helical spring (25).

6. Control device (1) according to any of claims 1-3, wherein the actuation element comprises a yielding shank (39, 40, 73).

7. Control device (1) according to any of the previous claims, wherein the manual actuation member (10, 34, 35, 70) comprises a lever (10).

8. Control device (1) according to any of claims 1-6, wherein the manual actuation member (10, 34, 35, 70) comprises a button (34, 35).

9. Control device (1) according to claim 7 or 8, wherein the manual actuation member (10, 34, 35, 70) is integrally made with the elastic actuation element (39, 40, 73).

10. Control device (1) according to claim 9, wherein the button (34, 35) is co-moulded with the elastic actuation element (39, 40).

11. Control device (1) according to any of claims 8-10, wherein a plurality of buttons (34, 35) are made on a common yielding membrane (38).

12. Control device (1) according to any of the previous claims, wherein a return element (15, 38) is provided to bias the manual actuation member (10, 34, 35, 70) towards a rest position in which said switch (46, 47, 48) is not actuated.

13. Control device (1) according to claim 12, wherein in the rest position of the manual actuation member (10, 34, 35, 70), the actuation element (24, 25, 39, 40, 73) is in contact with or in close proximity of the switch (46, 47, 48).

14. Control device (1) according to any of the previous claims, wherein the support body (2) is suitable for attachment at a grip end of curved handlebars.

15. Control device (1) according to any of the previous claims, wherein said manual actuation member (10, 34, 35, 70) has a predetermined stroke (8a).

16. Control device (1) according to any of the previous claims, wherein said at least one bicycle equipment is selected from the group consisting of an electromechanical derailleur or a cyclecomputer.

17. Control device (1) according to any of the previous claims, wherein said control device (1) further comprises at least one further manual actuation member (8) to impart at least one mechanical control to a bicycle equipment.

18. Control device (1) according to claim 17, wherein the mechanical bicycle equipment comprises a mechanical derailleur and/or a mechanical brake.

19. A bicycle comprising a control device (1) according to any of the previous claims.
